# FASCICULE DE BREVET EUROPEEN

(11) **EP 4 334 142 B1**
(45) Date de publication et mention de la délivrance du brevet: **22.10.2025**
(21) Numéro de dépôt: 22718754.9
(22) Date de dépôt: 04.04.2022
(51) Int. Cl.: B60C 15/06, B60C 13/00

(54) **PNEUMATIQUE AVEC DES PERFORMANCES OPTIMISÉES EN RÉSISTANCE AU ROULEMENT ET EN COMPORTEMENT ROUTIER**
REIFEN MIT OPTIMIERTER LEISTUNG HINSICHTLICH ROLLWIDERSTAND UND STRASSENSTABILITÄT
TYRE HAVING OPTIMIZED PERFORMANCE IN TERMS OF ROLLING RESISTANCE AND ROADHOLDING

(30) Priorité: 07.05.2021 FR 2104827
(43) Date de publication de la demande: 13.03.2024
(73) Titulaire: COMPAGNIE GENERALE DES ETABLISSEMENTS MICHELIN, 63000 Clermont-Ferrand (FR)
(72) Inventeur: GANDER, Sophie, 63040 CLERMONT-FERRAND Cedex 9 (FR); ROTY, Gael, 63040 CLERMONT-FERRAND Cedex 9 (FR)
(74) Mandataire: M.F.P. Michelin
(86) Numéro de dépôt international: PCT/FR2022/050624
(87) Numéro de publication internationale: WO 2022/234200

(56) Documents cités:
- WO-A1-2019/106248
- CN-A- 102 126 401
- US-A1- 2014 360 647

## Description

### Domaine de l'invention

La présente invention concerne un pneumatique pour véhicule automobile dont les performances en résistance au roulement sont améliorées sans dégrader la rigidité de dérive transversale. L'invention est plus particulièrement adaptée pour un pneumatique radial destiné à équiper un véhicule de tourisme ou une camionnette.

### Définitions

Par convention, on considère un repère (O, OX, OY, OZ), dont le centre O coïncide avec le centre du pneumatique, les directions circonférentielles OX, axiale OY, et radiale OZ désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique est usuellement décrite par une représentation de ses constituants dans un plan méridien, c'est-à-dire un plan contenant l'axe de rotation du pneumatique.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse constituée d'éléments de renforcement métalliques ou textiles enrobés dans un mélange élastomérique d'enrobage. Les éléments de renforcement sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une structure annulaire de renforcement. La structure annulaire de renforcement peut être une tringle qui comprend un élément de renforcement circonférentiel le plus souvent métallique entouré d'au moins un matériau, de manière non exhaustive, élastomérique ou textile. L'enroulement de la couche de carcasse autour de la structure annulaire va de l'intérieur vers l'extérieur du pneumatique pour former un retournement, comprenant une extrémité. Le retournement, dans chaque bourrelet, permet l'ancrage de la couche d'armature de carcasse à la structure annulaire du bourrelet.

Chaque bourrelet comprend une couche de bourrage prolongeant radialement vers l'extérieur la structure annulaire de renforcement. La couche de bourrage est constituée d'au moins un mélange élastomérique de bourrage. La couche de bourrage sépare axialement la partie principale et le retournement de l'armature de carcasse.

Chaque bourrelet comprend également une couche de protection prolongeant radialement vers l'intérieur le flanc et axialement extérieur au retournement. La couche de protection est également au moins en partie en contact par sa face axialement extérieure avec un crochet de la jante. La couche de protection est constituée d'au moins un mélange élastomérique de protection.

Chaque bourrelet peut comprendre enfin une couche latérale de renforcement positionnée entre le flanc et le retournement de l'armature de carcasse. La couche latérale de renforcement extérieure est constituée d'au moins un mélange élastomérique.

Chaque flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection. Pour certaines applications, les élastomères considérés peuvent également comprendre des thermoplastiques (TPE).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de mélange considérée.

Un mélange élastomérique peut être caractérisé mécaniquement, en particulier après cuisson, par ses propriétés dynamiques, telles qu'un module de cisaillement dynamique G*= (G'2+G''2)1/2, où G' est le module élastique de rigidité de cisaillement et G" le module de cisaillement visqueux, et une perte dynamique Tanδ=G''/G'. Le module de cisaillement dynamique G* et la perte dynamique Tanδ sont mesurés sur un viscoanalyseur de type Metravib VA4000, selon la norme ASTM D 5992-96. On enregistre la réponse d'un échantillon de mélange élastomérique vulcanisé ayant la forme d'une éprouvette cylindrique de 2 mm d'épaisseur et de 78 mm² de section, soumis à une sollicitation sinusoïdale en cisaillement simple alterné, à la fréquene de 10Hz, à une température de 100°C. On effectue avec un balayage en amplitude de déformation de 0,1% à 50% (cycle aller), puis de 50% à 0,1% (cycle retour). Pour le cycle aller, on indique la valeur maximale de tan(δ) observée, noté Tan(δ)ₘₐₓ.

La performance "comportement" correspond aux réponses d'un ensemble véhicule/pneu à des sollicitations multiples du conducteur (braquage, accélération, freinage...). Le comportement est à la fois essentiel en termes de sécurité pour la stabilité du véhicule mais également pour l'agrément de conduite.

Le pneu joue un rôle clé dans le comportement routier car il assure, en bout de chaîne, la transmission des efforts entre le véhicule et le sol afin de maintenir la trajectoire définie par le conducteur.

En virage, pour que le véhicule reste sur une trajectoire, il faut générer une force équivalente (mais de sens opposé) à la force centrifuge qui tend à éjecter le véhicule de la trajectoire. Cette force latérale doit être générée par les 4 pneus du véhicule pour vaincre la force centrifuge.

La déformation des pains de gomme en contact avec le sol génère un effort latéral. Le mécanisme qui permet au pneu de déformer les pains de gomme en virage est la mise en dérive. La dérive est l'angle entre la direction de la roue et la trajectoire suivie par le véhicule. En virage, cet angle n'est pas nul afin de permettre au pneumatique de déformer les pains de gomme de la bande de roulement et ainsi de générer les efforts latéraux nécessaires.

On appelle rigidité de dérive transversale la variation des efforts transversaux générés dans l'aire de contact du pneumatique en mouvement écrasé par la charge portée, en fonction de l'angle de dérive appliqué au pneumatique. La rigidité de dérive transversale s'exprime en Newton par degré (N/°).

Pour de faibles angles de dérive, c'est-à-dire des angles inférieurs à 10°, l'effort transversal, de direction parallèle à l'axe de rotation du pneumatique est proportionnel à l'angle de dérive. La rigidité de dérive transversale est égale à ce coefficient de proportionnalité.

La rigidité de dérive transversale est une grandeur physique essentielle qui relie le pneumatique au véhicule et détermine la qualité du comportement du véhicule sur route.

La résistance au roulement est une autre performance traitée dans la demande. La résistance au roulement est l'une des forces qui s'opposent à l'avancement du véhicule. Le coefficient de Résistance au Roulement d'un pneumatique (C_{RR}), c'est la force de résistance au roulement ramenée à la charge portée par le pneumatique. Le coefficient est exprimé en kg/t.

La résistance au roulement est liée essentiellement à la déformation du pneumatique. A titre d'illustration, les bourrelets associés aux flancs représentent de 20% à 30% de la résistance au roulement du pneumatique, alors que la bande de roulement contribue à hauteur de 60% à 80%.

Le plus souvent dans cette présente demande de brevet, le pneumatique apparaît monté sur une jante. Ladite jante est choisie selon les spécifications de la norme l'ETRTO (Organisation Européenne Technique des Pneumatiques et des jantes) qui, à une dimension pneumatique donnée, associe des jantes recommandées. En général, plusieurs largeurs jantes peuvent convenir à une même dimension pneumatique. La partie de la jante qui interagit avec le pneumatique dans le cadre de l'invention est axisymétrique par rapport à l'axe de rotation du pneumatique. Pour décrire la jante, il suffit de décrire le profil générateur dans un plan méridien.

Dans un plan méridien, la jante comprend au moins un crochet situé à une extrémité axiale, et relié à un siège qui est destiné à recevoir une face du bourrelet située le plus radialement intérieurement. Entre le siège et le crochet, prend place une portion rectiligne qui relie le crochet de jante au siège par des congés de raccords. Le crochet de la jante prolongée par la portion rectiligne limite axialement le déplacement des bourrelets lors du gonflage.

La montabilité des bourrelets sur une jante lors du gonflage est aussi une performance peut être impactée par l'invention. La performance montabilité des bourrelets consiste à évaluer l'aptitude des bourrelets d'un pneumatique à s'installer correctement sur une jante lors de du gonflage. Sur la face radialement la plus intérieure du bourrelet, le contact avec le siège doit être suffisant pour éviter toute fuite de l'air de gonflage du pneumatique. En général, une pression de contact d'au moins 1.4 MPa est attendue dans cette zone de contact. La pression de gonflage vient coincer le bourrelet contre le crochet de la jante. Là encore la pression de contact sur le crochet doit être suffisante pour éviter le déjantage du pneumatique notamment dans les virages sévères à vitesse élevée. Des moyens d'observation, notamment radiographiques, des bourrelets montés sur une jante permettent de diagnostiquer la qualité du montage.

Il est donc possible de classer deux pneumatiques par rapport à leur performance de montabilité sur jante.

### Technique antérieure

La réduction des émissions de gaz à effet de serre des transports est un des défis majeurs devant lequel se trouvent les constructeurs de véhicules aujourd'hui. Le pneumatique constitue une source importante de progrès, par le biais d'un abaissement de la résistance au roulement, car celle-ci a un impact direct sur la consommation de carburant du véhicule. A titre d'illustration, une baisse de 20% de la résistance au roulement d'un pneumatique permet d'économiser environ 3% de carburant aux 100 km en cycle mixte.

Il existe encore un besoin de réduire la résistance au roulement des pneumatiques tourisme sans dégrader leur comportement sur véhicule. On connait de l'état de la technique le document US 2014/360647.

Il déjà a été proposé d'améliorer la résistance au roulement des pneumatiques pour véhicules de tourisme en optimisant leurs bourrelets. Le document WO 2010/072736 enseigne notamment d'utiliser des compositions élastomériques ayant de faibles modules élastiques de rigidité de cisaillement G' autour 15MPa et des modules visqueux G" inférieurs de plus de 20% aux modules élastiques de rigidité de cisaillement pour obtenir une baisse notable de la résistance au roulement.

Ce document préconise également de réduire encore davantage la résistance au roulement en optimisant la géométrie des couches de mélange élastomérique dont les modules élastique et visqueux vérifient la relation précédente. Cette optimisation conduit à des profils de couches de mélanges élastomériques plus court et plus large que dans des pneumatiques traditionnels. Dans certains cas, la difficulté de mise en œuvre industrielle pour fabriquer ces profils de couches de mélanges est un inconvénient majeur de cette approche.

Le document FR2994127 décrit un perfectionnement du document WO 2010/072736, en proposant d'ajouter une armature de renforcement dans les bourrelets. L'armature de renforcement est formée de renforts enrobés dans un mélange élastomérique.

L'inconvénient majeure de cette solution est une dégradation significative du coût de revient industriel avec l'introduction de nouveaux semi-finis dans le processus de fabrication du pneumatique.

Les inventeurs se sont donnés pour objectif de réaliser un pneumatique qui améliore le niveau de résistance au roulement sans dégrader le comportement du véhicule, et tout en maîtrisant les coûts de fabrication afférents.

### Exposé de l'invention

Ce but a été atteint par un pneumatique pour véhicule de tourisme comprenant dans un plan méridien :
deux bourrelets destinés à être montés sur une jante, deux couches de flancs reliés aux bourrelets, un sommet comportant une bande de roulement, le sommet ayant un premier côté relié à l'extrémité radialement extérieure de l'une des deux couches de flancs et ayant un deuxième côté relié à l'extrémité radialement extérieure de l'autre des deux couches de flancs ;
chaque flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique,
au moins une armature de carcasse s'étendant depuis les deux bourrelets jusqu'au sommet, l'armature de carcasse comportant une pluralité d'éléments de renforcement de carcasse et étant ancrée dans les deux bourrelets par un retournement autour d'une structure annulaire de renforcement, de manière à former dans chaque bourrelet une partie principale et un retournement ;
deux zones basses comme étant des portions du pneumatique, positionnées de part et d'autre de l'axe radial OZ, une première zone basse d'un premier côté de l'axe radial OZ incluant le bourrelet et au moins en partie la couche de flanc de ce premier côté et une deuxième zone basse de l'autre côté de l'axe radial OZ incluant le bourrelet et au moins en partie la couche de flanc de ce deuxième côté ;
chaque zone basse ayant une surface méridienne délimitée par une droite axiale AA' passant à une distance radiale égale à 70% de la distance H, où H étant la distance radiale entre une première droite axiale HH' passant par le point le plus radialement intérieur de la structure annulaire de renforcement, et entre une deuxième droite axiale DD' tangente à la bande de roulement en son point le plus radialement extérieur, et radialement intérieurement ladite surface méridienne étant délimitée par le contour périphérique du bourrelet destiné à être en contact avec la jante;
chaque zone basse occupant un volume obtenu par la rotation de ladite surface méridienne autour de l'axe de rotation du pneumatique ;
le bourrelet de chaque zone basse comportant au moins une couche de bourrage comprise au moins en partie entre la partie principale de l'armature de carcasse, le retournement de l'armature de carcasse et la portion radialement extérieure de la structure annulaire de renforcement;
les mélanges élastomériques ayant un module élastique de rigidité de cisaillement et une perte viscoélastique mesurées selon la norme ASTM D 5992-96, à 23°C, sous une déformation de cisaillement égale à 10% ;
lesdites couches de mélanges de chaque zone basse ayant une perte viscoélastique Tan(δ)max inférieure ou égale à 0.10, représentent un volume compris entre 30% et 90% du volume total de ladite zone basse ;
le module élastique de rigidité de cisaillement de chaque couche de flanc est compris dans l'intervalle [2.5 ; 10] MPa.

Les pneumatiques de l'invention ont deux zones basses positionnées de part et d'autre de l'axe radial (OZ). Le contour de chaque zone basse dans un plan méridien comprend la droite axiale AA', la paroi axialement extérieure en contact l'air ambiant d'une partie de la couche de flanc qui se prolonge radialement intérieurement par la périphérie externe de la couche de protection destinée à être en contact avec la jante. Le contour de chaque zone basse se poursuit par la paroi axialement interne du bourrelet en contact avec le gaz de gonflage du pneumatique. Autrement dit, le contour de la zone basse reprend les contours externes de la couche de flanc au moins en partie et le contour externe du bourrelet contenus tous les deux dans la zone basse.

Le volume d'une zone basse est le prolongement circonférentiel de son contour dans un plan méridien ci-dessus défini.

Ainsi définies, les zones basses représentent de 20% à 30% de la résistance au roulement du pneumatique. Cette contribution est due principalement à la dissipation viscoélastique des mélanges élastomériques de plus grands volumes et de plus forte hystérèse.

Lors du roulage d'un pneumatique gonflé, monté sur une jante, et écrasé par la charge portée, les zones basses subissent des cycles de déformations de flexions d'intense amplitude résultant du passage périodique dans l'aire de contact. Ces déformations associées aux niveaux d'hystérèse des mélanges élastomériques sont à l'origine de la dissipation viscoélastique des zones basses.

Le principe de l'invention est de doter les couches de mélanges élastomériques de la zone basse de plus grand volume d'une hystérèse mesurée par une valeur de Tan(δ)max inférieure ou égale à 0.10 de manière à baisser la dissipation viscoélastique du bourrelet et donc à améliorer la résistance au roulement par rapport à pneumatique de conception usuelle. En effet la conception usuelle des bourrelets utilise pour lesdites couches de mélanges élastomériques un module élastique de rigidité de cisaillement supérieur à 30 MPa. Mais le plus souvent, de tels mélanges élastomériques ont également une hystérèse mesurée par une valeur de Tan(δ)max nettement supérieurs à 0.10.

Dans le cas des zones basses des pneumatiques de l'invention, entre 30% et 90% du volume de chaque zone basse est constitué de mélanges élastomériques de basse hystérèse c'est-à-dire des mélanges avec une hystérèse mesurée par une valeur de Tan(δ)max inférieure à 0.10.

En affectant à la couche de flanc d'un pneumatique de l'invention un mélange élastomérique doté d'un module élastique de rigidité de cisaillement pouvant aller jusqu'à 10 MPa, on maintient la rigidité de dérive latérale à un niveau convenable, utile pour un bon comportement routier du véhicule. En effet, la conception usuelle des flancs vise un module élastique de rigidité de cisaillement inférieur ou égal à 1.5 MPa.

La combinaison du choix de mélanges élastomériques des plus grands volumes de la zone basse avec une basse hystérèse et le choix d'une couche de flanc dotée d'un module élastique de rigidité de cisaillement pouvant aller jusqu'à 10 MPa sont les caractéristiques principales qui conduisent au pneumatique de l'invention qui réalise un compromis entre l'amélioration de la résistance au roulement sans dégrader le comportement routier. La couche de flanc des pneumatiques de l'invention plus rigide qu'en conception usuelle compense par exemple la baisse du module élastique de rigidité de cisaillement de la couche de bourrage. En outre, les solutions mises en œuvre ne nécessitent pas d'évolutions majeures des procédés ce qui permet de cantonner le coût de revient industriel à un niveau usuel.

Les bourrelets des pneumatiques de l'invention reposent notamment sur un équilibre entre la rigidité de cisaillement, et l'hystérèse des mélanges élastomériques les constituants. Le module élastique de rigidité de cisaillement de chaque couche de flanc reste inférieur à 10 MPa pour que l'hystérèse reste à un niveau mesuré par une valeur Tan(δ)max inférieure ou égale à 0.10.

Préférentiellement, lesdites couches de mélanges de la zone basse ayant une perte viscoélastique Tan(δ)max inférieure ou égale à 0.10, représentent un volume compris entre 40% et 90% du volume total de la zone basse, et encore préférentiellement un volume compris entre 50% et 90% du volume total de la zone basse.

L'architecture des zones basses est variable selon la présence des couches de mélanges élastomériques nécessaires au bon fonctionnement du pneumatique. En particulier, le diamètre de la jante de montage est un paramètre très impactant sur l'architecture des bourrelets. A titre d'illustration pour des diamètres de jante au-delà de 16 pouces, chaque bourrelet comprend souvent une couche latérale de renforcement de la couche de bourrage pour transmettre efficacement le couple du véhicule. Le volume de mélanges de basse hystérèse par rapport au volume total de la zone basse s'en trouve impacté. Un taux de 90% de volume de mélanges élastomériques de basse hystérèse constitue une borne supérieure qui traduit que chaque zone basse comprend également des matériaux non hystérétiques. En revanche pour de plus petits diamètres de jante, l'architecture des zones basses peut être simplifiée, et le taux de mélanges de basse hystérèse par rapport au volume total de chaque zone basse peut atteindre une valeur de 40%.

Selon l'invention, la couche de bourrage est constituée d'un mélange élastomérique dont la perte viscoélastique Tan(δ)max inférieure ou égale à 0.10.

La couche de bourrage du bourrelet occupe en général un grand volume et subit de fortes déformations de cisaillements dues aux variations de tensions dans les renforts de la partie principale de la couche de carcasse et de son retournement. Le choix d'un mélange élastomérique de basse hystérèse contribue à maîtriser le niveau de dissipation viscoélastique.

Selon l'invention, le bourrelet comprend une couche latérale de renforcement constitué d'un mélange élastomérique occupant un volume compris au moins en partie entre la couche de flanc, et le retournement de l'armature de carcasse.

Selon les inventeurs, la couche latérale de renforcement du bourrelet vient en complément de la première couche de bourrage apporter de la rigidité transversale. En fonction de ces propriétés matérielles en termes de Tan(δ)max et de rigidité dynamique de cisaillement, ledit renforcement permet d'ajuster l'équilibre de performances entre la résistance au roulement et le comportement routier.

Encore selon l'invention, ladite couche latérale de renforcement d'au moins un bourrelet est constitué d'un mélange élastomérique dont la perte viscoélastique Tan (δ) max est inférieure ou égale 0.10.

Dans l'invention, les deux couches de mélanges à savoir la couche de bourrage et la couche latérale de renforcement vérifient la propriété d'avoir une perte viscoélastique Tan (δ) max inférieure à 0.10. Le gain en résistance au roulement est optimal, tout en ayant un comportement routier du pneumatique monté sur véhicule conforme aux attendus.

Dans un autre mode de réalisation de l'invention, dans chaque bourrelet une courbe de contact jante comprend les points du pneumatique en contact avec la jante. Ladite courbe de contact jante relie un premier point M1 du pneumatique axialement positionné le plus extérieurement, et en contact avec la jante, et un deuxième point M2 du pneumatique également en contact avec la jante et situé au milieu de la portion rectiligne reliant le crochet au siège de la jante. La longueur de ladite courbe de contact jante est la distance curviligne du point M1 au point M2 le long de la courbe de contact. Ledit pneumatique comprenant également deux sections dans une coupe méridienne verticale du pneumatique gonflé, monté sur une jante, et écrasé sur un sol par une charge verticale où la charge, la pression de gonflage, étant déterminées dans une norme de spécifications telle que l'ETRTO (Organisation Européenne Technique des Pneumatiques et des jantes); une première section étant située dans l'aire de contact, et une deuxième section étant située du côté opposé à la précédente par rapport à l'axe de rotation du pneumatique. Dans la première section située dans l'aire de contact, dans au moins un premier bourrelet, la longueur de la courbe de contact j ante, LADC, est mesurée. Dans la deuxième section située à l'opposé de l'aire de contact par rapport à l'axe de rotation du pneumatique, dans au moins un deuxième bourrelet, la longueur de la courbe de contact jante, LCJ, est mesurée, alors le rapport de la différence des longueurs des courbes de contact jante des deux sections soit 100*(LADC-LCJ)/LCJ, est supérieur ou égal à 30%.

Dans ce mode de réalisation, le taux de variation de contact jante des pneumatiques de l'invention est nettement supérieur à celui constaté sur les pneumatiques de l'état de l'art.

Lorsque le pneumatique gonflé, monté sur une jante, est écrasé par une charge portée, les points du pneumatique en contact avec la jante peuvent varier d'un méridien à l'autre. Il s'ensuit que la longueur de la courbe de contact jante telle que définie précédemment varient également d'un méridien à l'autre.

Le pneumatique est conçu de manière à ce que la courbe de contact jante soit la plus longue possible dans l'aire de contact, en comparaison aux pneumatiques de l'état de l'art, et plus précisément dans le méridien au centre de l'aire de contact. Dans ces conditions, les inventeurs estiment que la contribution du contact jante à la rigidité de dérive est maximale.

Dans une coupe méridienne d'un pneumatique gonflé, monté sur une jante, et écrasé par la charge portée, on peut voir une première section du pneumatique qui passe par le centre de l'aire de contact. On entend par aire de contact l'ensemble des points du pneumatique, à un instant donné qui sont en contact avec le sol d'écrasement. On appelle centre de l'aire de contact le point de l'air de contact situé sur l'axe vertical OZ. On peut également voir à l'opposé de l'aire de contact par rapport à l'axe de rotation OY du pneumatique une autre section du pneumatique qui globalement défini un état déformé assimilable à l'état du gonflage axisymétrique.

Le taux de variation du contact jante correspond à la valeur maximale de l'évolution des longueurs de contact jante au tour de roue.

Selon les inventeurs, une étape essentielle de la conception d'un pneumatique de ce mode de réalisation consiste à modifier son profil extérieur dans la zone de contact avec la jante. Diverses solutions sont possibles comme par exemple, d'augmenter l'épaisseur axiale de la couche de flanc à la jonction avec la couche de protection. D'autres solutions consistent à modifier le profil extérieur de manière à obtenir un profil dans la zone de contact avec la même courbure que le crochet de jante. Une autre solution encore consiste à insérer un coussin de mélange dans la zone à la jonction des couches de flanc et de protection, au niveau du crochet de la jante. Ce coussin de mélange peut être constitué de préférence du même mélange que celui de la couche de flanc de manière à maintenir le coût de revient industriel. L'attendue vis-à-vis de ce coussin de mélange élastomérique est surtout son module élastique de rigidité de cisaillement qui avantageusement pourrait être par exemple égal à celui de la couche de flanc.

Avantageusement, le rapport de la différence des longueurs des courbes de contact jante des deux sections soit 100*(LADC-LCJ)/LCJ, est supérieur ou égal à 40%, préférentiellement supérieur ou égal à 50%, encore préférentiellement supérieur ou égal à 60%.

Le profil extérieur dans la zone de contact avec la jante peut être modifié de manière à viser un taux de variation de contact jante. C'est donc un levier pour ajuster la rigidité de dérive transversale dans la recherche du compromis de performances entre la résistance au roulement et le comportement routier du pneumatique. La rigidité de dérive transversale est une fonction croissante du taux de variation de contact jante. Pour des taux de variation du contact jante supérieur ou égal à 60%, la modification du profil extérieur de la couche de flanc facilite le montage du bourrelet, mais des taux trop élevés au-delà de 100%, pourraient gêner la montabilité.

En complément aux caractéristiques principales de l'invention, les inventeurs ont identifié des leviers liés à la géométrie des couches de mélanges du bourrelet pour mieux optimiser encore le compromis de performances du pneumatique avec une résistance au roulement améliorée tout en ayant un bon comportement routier.

Avantageusement, la distance DRB étant la distance radiale d'une extrémité de la couche de bourrage radialement extérieure à la droite HH', ladite distance DRB est inférieure ou égale à 50% de la hauteur radiale H du pneumatique.

La hauteur H du pneumatique est la distance normale entre une première droite HH'parallèle à l'axe de rotation du pneumatique et tangente au point le plus radialement intérieur de la structure annulaire de renforcement, et une deuxième droite DD' également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Avantageusement, la distance DRI étant la distance radiale d'une extrémité radialement intérieure de la couche latérale de renforcement à la droite HH', ladite distance radiale DRI est comprise dans l'intervalle [5% ; 25%] de la hauteur radiale H du pneumatique.

Avantageusement encore, la distance DRL étant la distance radiale de l'extrémité radialement extérieure de la couche latérale de renforcement à la droite (HH'), ladite distance radiale DRL est supérieure ou égale à 25% de la hauteur radiale H du pneumatique.

La couche latérale de renforcement comprise entre le flanc et le retournement de l'armature de carcasse contribue à la rigidité du bourrelet en renfort à la première couche de bourrage. Selon les inventeurs, son positionnement est ajusté par les côtes DRI et DRL de manière à résister aux sollicitations de flexions, d'extensions-compression du bourrelet lors du passage dans l'aire de contact.

Dans un mode avantageux de réalisation de l'invention, le retournement de l'armature de carcasse est plaqué contre la partie principale de l'armature de carcasse sur toute sa hauteur radialement extérieurement.

Comme dit plus haut, l'armature de carcasse est formée de renforts enrobés entre deux couches de mélanges élastomériques. Le retournement de l'armature de carcasse est plaqué contre la partie principale de l'armature de carcasse signifie que le retournement est en contact avec la branche principale de l'armature de carcasse. Le contact s'effectue selon une surface positionnée entre les deux couches d'enrobage de l'armature de carcasse.

Dans cette configuration, le volume de la première couche de bourrage est limité au strict minimum autour de la structure annulaire de renforcement. Cette configuration est très avantageuse pour la baisse de la résistance au roulement du bourrelet.

Dans un autre mode de réalisation, le pneumatique comporte une armature de renforcement du bourrelet axialement extérieurement à l'armature de carcasse, et axialement intérieurement au flanc.

L'armature de renforcement du bourrelet est formée de renforts parallèles entre eux, et enrobés entre deux couches de mélanges élastomériques. L'ajout de ce semi-fini entraîne un surcoût de la fabrication qu'il convient de compenser. Afin de limiter l'impact sur le coût de revient d'une telle solution, ce mode de réalisation peut être combiné avec le plaquage du retournement de l'armature de carcasse contre la partie principale de l'armature de carcasse.

Avantageusement, dans chaque bourrelet, le mélange élastomérique constitutif d'au moins une couche parmi la couche de bourrage, et/ou la couche latérale de renforcement, et/ou la couche de flanc a une composition à base d'un élastomère diénique, d'un système de réticulation, d'une charge renforçante, type Noir de Carbone 550, à un taux global compris entre 50 et 75 pce.

Encore avantageusement, dans chaque bourrelet, le mélange élastomérique constitutif de la couche de bourrage, le mélange élastomérique constitutif de la couche latérale de renforcement, et le mélange élastomérique constitutif la couche de flanc ont la même composition.

Par élastomère (ou indistinctement caoutchouc) «diénique», on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène styrène (SIR), les copolymères de butadiène-styrène-isoprène (SBIR) et les compositions de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les compositions de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en œuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

### Brève description des dessins

D'autres détails et caractéristiques avantageux de l'invention ressortiront ci-après de la description des exemples de réalisation de l'invention en référence aux figures qui représente des vues méridiennes de schémas d'un pneumatique selon un mode de réalisation de l'invention. Les figures ne sont pas représentées à l'échelle pour en simplifier la compréhension.
La figure 1 comprend une vue 1-A qui montre une section d'un pneumatique de l'invention dans un plan méridien, et une vue 1-B qui représente un grossissement d'une portion de la vue méridienne 1-A entourée d'un cercle en tirets montrant une zone basse d'un pneumatique de l'invention.
Les figures 2-A, 2-B, 2-C, et 2-D montrent un mode de réalisation de l'invention avec des modifications du profil extérieur de la couche de flancpour faciliter le contact avec la jante.
La figure 3 représente une coupe méridienne du pneumatique gonflé, monté sur une jante et écrasé par une charge portée. On voit une première section dans l'aire de contact et une deuxième section opposée à l'aire de contact par rapport à l'axe (OY). Cette figure illustre la détermination du taux de variation de contact avec la jante.
Les figures 4-A et 4-B représentent la visualisation des principales côtes de la zone basse.

### Description détaillée de l'invention

L'invention a été mise en œuvre sur un pneumatique tourisme de dimension 245/45R18, selon la norme de spécifications de l'ETRTO (Organisation Technique Européenne des jantes et Pneumatiques). Un tel pneumatique peut porter une charge de 800 kilos, gonflé à une pression de 250 kPa.

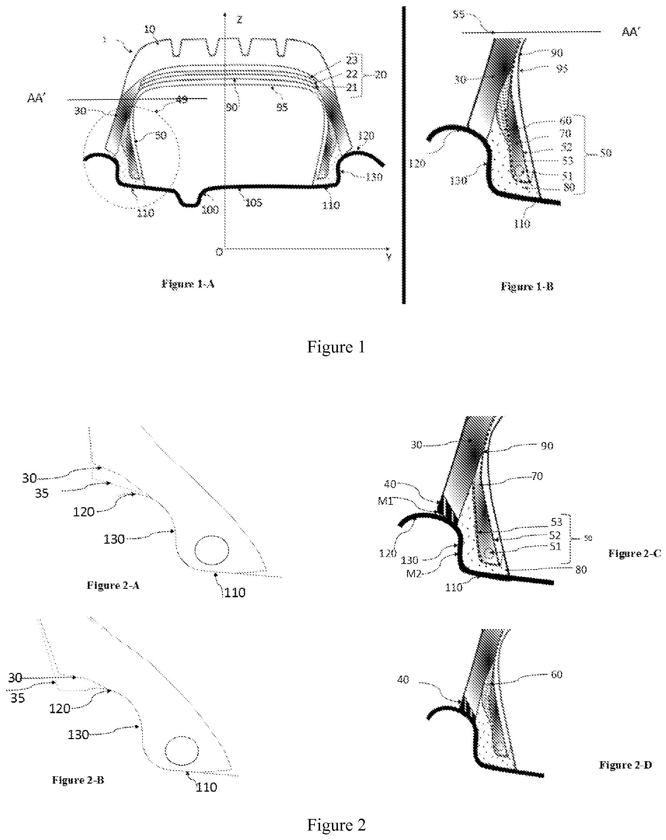

Sur la figure 1-A, le pneumatique de référence générale 1 comprend une armature de carcasse 90 constituée de renforts enrobés de composition caoutchouteuse, et deux bourrelets 50 en contact avec une jante 100. Une zone 49 délimitée par un cercle en pointillé définie une zone basse du pneumatique dont un grossissement est proposé sur la figure 1-B. L'armature de carcasse 90 est ancrée dans chacun des bourrelets 50. Le pneumatique comporte en outre une armature de sommet 20 comprenant deux couches de travail 21, 22, et une couche de frettage 23. Chacune des couches de travail 21 et 22 est renforcée par des éléments de renforcement filaires qui sont parallèles dans chaque couche et croisés d'une couche à l'autre, en faisant avec la direction circonférentielle des angles compris entre 10° et 70°. La couche de frettage 23, disposée radialement à l'extérieur de l'armature de sommet 20, cette couche de frettage 23 étant formée d'éléments de renforcement orientés circonférentiellement et enroulés en spirale. Une bande de roulement 10 est posée radialement sur la couche de frettage 23; c'est cette bande de roulement 10 qui assure le contact du pneumatique 1 avec un sol. Le pneumatique 1 représenté est un pneu « tubeless » : il comprend une « gomme intérieure » 95 en composition caoutchouteuse imperméable au gaz de gonflage, recouvrant la surface intérieure du pneumatique.

La partie de la jante 100 qui interagit avec le pneumatique dans le cadre de l'invention est axisymétrique par rapport à l'axe de rotation du pneumatique.

Dans un plan méridien, la jante 100 comprend au moins un crochet 120 situé à une extrémité axiale, et relié à un siège 110 qui est destiné à recevoir une face du bourrelet située le plus radialement intérieurement. Entre le siège 110 et le crochet 120, prend place une portion rectiligne 130 qui relie le crochet de jante 120 au siège 110 par des congés de raccords. Le crochet de la jante 120 prolongée par la portion rectiligne 130 limite axialement le déplacement des bourrelets lors du gonflage.

Sur la figure 1-B, on montre une zone basse de référence générale 55 contenant la couche de flanc 30 et le bourrelet 50. Le contour de la zone basse reprend les contours externes de la couche de flanc 30 au moins en partie et le contour externe du bourrelet 50.

Ledit bourrelet 50 comprend en partie une armature de carcasse 90 qui comporte une partie principale 52, puis s'enroule autour d'une structure annulaire de renforcement 51 pour former un retournement 53. Une couche de bourrage 70 est positionnée entre la partie principale 52 de l'armature de carcasse 90 et de son retournement 53. Selon les modes de réalisation, le bourrelet 50 peut comprendre une couche latérale de renforcement 60, positionnée axialement extérieurement au retournement 53, et axialement intérieurement à la couche de flancs 30. Axialement le plus intérieurement au bourrelet 50, une couche étanche 95 constitue la paroi intérieure en contact avec l'air interne de gonflage.

Ledit bourrelet 50 comprend également une couche de protection 80 qui est en contact axialement extérieurement avec une portion rectiligne 130 de la jante de façon à limiter le déplacement axial du bourrelet. Ladite couche de protection 80 comprend aussi une portion destinée à être en contact avec la jante au niveau du siège de jante 110. Une couche de flanc 30 coopère avec le bourrelet 50 et constitue une paroi latérale extérieure.

Sur la figure 2-A, on a représenté les profils extérieurs d'un bourrelet 50 d'un pneumatique selon un mode de réalisation particulier de l'invention en comparaison à celui d'un pneumatique de conception usuelle. Le bourrelet 50 est représenté dans une section opposée à l'aire de contact. Les deux profils se différencient dans une zone au niveau du crochet de jante 120. La référence 30 indique le profil d'un pneumatique de l'état de l'art, et la référence 35 montre la modification du profil opérée sur le pneumatique de l'invention pour faciliter le contact avec la jante 100.

Sur la figure 2-B, nous avons la même représentation que sur la figure 2-A, mais les profils sont montrés au centre de l'aire de contact avec le sol. Le pneumatique est en contact avec tout le crochet de jante 120 contrairement à la figure 2-A. Le taux de variation de contact jante traduit cette évolution du contact jante.

Dans un autre mode de réalisation représentée sur la figure 2-C, on trouve un coussin de mélange élastomérique 40 (modification située à l'extrémité radialement intérieure du flanc 30), destiné à être en contact avec le crochet de jante 120. Le coussin de mélange 40 est délimité radialement intérieurement par une courbe qui épouse le profil du crochet de jante 120. Un premier côté du coussin de mélange élastomérique 40 a une forme géométrique appropriée qui anticipe le contact avec la courbure du crochet de jante de manière à épouser la forme du crochet de jante 120 lors du contact, un deuxième côté du coussin de mélange élastomérique prolonge un côté extérieur d'un flanc en contact avec l'air ambiant, un troisième côté du coussin de mélange élastomérique 40 est en contact avec l'extrémité radialement intérieure du flanc et enfin un quatrième côté du coussin de mélange élastomérique est en contact avec la couche de protection 80.

Sur la figure 2-C, la courbe de contact jante s'étend depuis un premier point M1 du pneumatique axialement positionné le plus extérieurement, et en contact avec la jante, et un deuxième point M2 du pneumatique également en contact avec la jante et situé au milieu de la portion rectiligne reliant le crochet 120 au 110 siège de la jante. La longueur de ladite courbe de contact jante est la distance curviligne du point M1 au point M2 le long de la courbe de contact jante.

La figure 2-D est une variante du mode de réalisation précédente caractérisée par la présence d'une couche latérale de renforcement 60 du bourrelet 50, positionnée axialement extérieurement au retournement 53 de l'armature de carcasse 90, et axialement intérieurement à la couche de flanc 30.

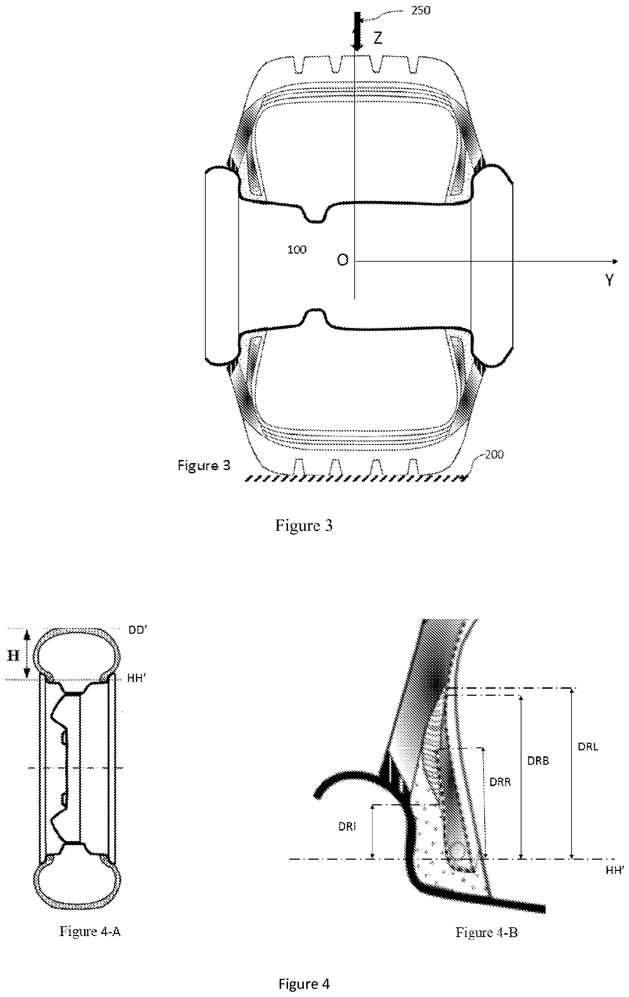

La figure 3 est une vue dans le plan vertical d'un pneumatique de l'invention selon un mode de réalisation précédent. Le pneumatique est gonflé, monté sur une jante 100 et écrasé par la charge portée 250 sur un sol 200. On peut voir une première section méridienne dans l'aire contact et une deuxième section méridienne à l'opposé de l'aire de contact. Dans la première section située dans l'aire de contact, dans au moins un premier bourrelet, on mesure la longueur de la courbe de contact jante 100, LADC. Dans la deuxième section dans au moins un deuxième bourrelet, on mesure également la longueur de la courbe de contact jante, LCJ. Le rapport de la différence des longueurs des courbes de contact jante des deux sections soit 100*(LADC-LCJ)/LCJ, est supérieur ou égal à 30%, et dans le cas présent est égal à 62%.

Sur la figure 4-A, la détermination de la hauteur H est illustrée. La hauteur H du pneumatique est la distance normale entre une première droite HH' parallèle à l'axe de rotation du pneumatique et tangente au point le plus radialement intérieur de la structure annulaire de renforcement, et entre une deuxième droite DD' également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Sur la figure 4-B on a représenté les paramètres géométriques du bourrelet en lien avec l'invention. Les hauteurs sont définies à partir de la droite HH', qui est tangente à la tringle 51 en son point radialement le plus intérieur :

DRI est la distance radiale par rapport à HH' de l'extrémité radialement intérieure de la couche latérale de renforcement 60. La distance radiale DRI est inférieure ou égale à 20% de la hauteur radiale H du pneumatique, et vaut 5mm dans l'exemple présenté ici ;

DRL est la distance radiale par rapport à la droite HH' de l'extrémité radialement extérieure de la couche latérale de renforcement 60. La distance radiale DRL est supérieure ou égale à 25% de la hauteur radiale H du pneumatique et vaut 38 mm dans l'exemple présenté ici ;

DRR est la distance radiale par rapport à HH' de l'extrémité du retournement de l'armature de carcasse 90. La distance radiale DRR étant supérieure ou égale à 10% de la hauteur radiale H du pneumatique et vaut 20 mm dans l'exemple présenté ici ;

DRB est la distance radiale par rapport à HH' de l'extrémité radialement extérieure de la couche de bourrage 70, et vaut 28 mm dans l'exemple présenté ici.

Le tableau n°1 qui suit donne les compositions de mélanges élastomériques d'une zone basse de l'invention. Les principaux mélanges utilisés sont listés en exprimant pour chacun les principaux ingrédients exprimés en pce (partie en poids pour cent parties en poids d'élastomère)

**[Tableau 1]**

| | Elastomère NR (Caoutchou c naturel) | Elastomère BR (Butadiène ) | Charge renforçant e noir de carbone | Agent anti-oxydan t | Soufr e | Accélérateu r | Résine renforçant e | Durcisseu r |
|---|---|---|---|---|---|---|---|---|
| M1 | 100 | 0 | 75 (N326) | 1.5 | 8.5 | 0.95 | 12 | 4.18 |
| M2 | 100 | 0 | 75 (N326) | 2 | 7.5 | 0.97 | 12 | 6.8 |
| M3 | 35 | 65 | 30 (N550) 10 (Silice) | 1.3 | 8.0 | 4.75 | 0 | 0 |
| M4 | 35 | 65 | 48 (N550) | 5 | 1.4 | 1.4 | 18 | 0 |

Les mélanges de l'invention utilisés dans cet exemple sont à base d'élastomère de caoutchouc naturel, ou d'un coupage de caoutchouc naturel et de butadiène pour les mélanges M3 et M4, renforcés par du noir de carbone. Des plastifiants (résine renforçante) entrent dans la composition pour faciliter la processabilité des mélanges. Les mélanges comprennent aussi des agents de vulcanisation, soufre, accélérateur, et des agents de protection. Les propriétés mécaniques et viscoélastiques associées, mesurées à 23°C sous une amplitude de déformation de 10% sont résumées dans le tableau n°2 :

**[Tableau 2]**

| | G' | G" | Tan (δ)max |
|---|---|---|---|
| M1 | 46 | 7 | 0.2 |
| M2 | 48 | 8 | 0.2 |
| M3 | 2.47 | 0.06 | 0.03 |
| M4 | 1.26 | 0.100 | 0.08 |

Des configurations de pneumatiques de l'invention ont été testées pour bien mettre en exergue les performances apportées par l'invention. Les résultats de ces tests sont comparés à ceux obtenus pour des pneumatiques témoins.

Le témoin T1 illustré par les figures 1-A, et 1-B, correspond à un pneumatique qui comprend une couche de bourrage constituée du mélange élastomérique M1, une couche latérale de renforcement du bourrelet constituée du mélange élastomérique M2, et une couche de flanc, constituée du mélange élastomérique M4. Le profil de la couche de flanc est de conception usuelle c'est-à-dire qu'il n'a pas été modifié pour faciliter le contact avec la jante.

Un deuxième témoin T2 reprend les spécifications de T1, mais les mélanges élastomériques de bourrage et de renforcement sont constitués du mélange M3.

Le premier pneumatique P1 conforme à l'invention reprend les spécifications du témoin T1, mais la couche de flanc, et la couche latérale de renforcement sont constituées du mélange élastomérique M3.

Le deuxième pneumatique P2 conforme à l'invention reprend les spécifications du témoin T1, mais la couche de bourrage et la couche de flanc sont constituées du mélange élastomérique M3.

Le troisième pneumatique P3 conforme à l'invention diffère du témoin en ce que les couches de mélanges élastomériques des couches de bourrage, de renforcement et de flanc sont constituées du mélange élastomérique M3.

Enfin, le quatrième pneumatique P4 de l'invention diffère de P3, par la modification du profil de la couche de flanc pour un taux de variation de contact jante supérieur à 30%.

Les configurations des pneumatiques P1, P2, et P3 de l'invention sont illustrées à la figure 1-B. Pour ce qui est de la configuration P4 des illustrations sont observables sur les figures 2-A, 2-B, et 2-D.

Le taux de variation de contact jante est de 62% pour P4, après une modification partielle du profil de la couche de flanc dans la zone du contact avec la jante, comme représenté sur les figures 2-A et 2-B.

Pour tous les pneus de l'invention, le taux de mélanges élastomériques avec une hystérèse inférieure ou égale à 0.10 est compris dans l'intervalle [30% ; 90%], comme illustré dans le tableau n°3 suivant :

**[Tableau 3]**

| Configuration pneu | couches de la zone basse Avec le mélange M3 | % Volume zone basse |
|---|---|---|
| P1 | Couche de flanc + couche de renforcement | 44 |
| P2 | Couche de flanc + couche de bourrage | 41 |
| P3 | Couche de flanc + couche de bourrage + couche de renforcement | 54 |
| P4 | Couche de flanc + couche de bourrage + couche renforcement + Profil zone contact jante modifié | 54 |

Le test de résistance au roulement a été opéré selon la norme ISO 28580. Pour un pneumatique testé, le résultat est le coefficient de résistance au roulement qui représente le rapport de la force de résistance à l'avancée du véhicule par hystérèse des pneumatiques divisé par la charge portée.

Les mesures de rigidité de dérive transversales ont été faites sur des machines de mesures dédiées comme par exemple celles commercialisées par la société MTS.

Un résultat supérieur (respectivement inférieur) à 100% signifie une amélioration (respectivement une dégradation) de la performance considérée.

Les résultats obtenus sont synthétisés dans le tableau n° 4 suivant :

**[Tableau 4]**

| | Résistance au roulement | Rigidité de dérive transversale |
|---|---|---|
| T1 | 100 | 100 |
| T2 | 110 | 96 |
| P1 | 108 | 98 |
| P2 | 104 | 100 |
| P3 | 112 | 99 |
| P4 | 111 | 102 |

Tous les pneumatiques de l'invention réalisent le compromis recherché entre la résistance au roulement et le comportement routier piloté la rigidité de dérive transversale. Les pneumatiques P1 et P3 ont une rigidité de dérive transversale respectivement de 98% et de 99% sans affecter de façon perceptible le comportement du véhicule. Les pneumatiques P2 et P4 ont des performances supérieures ou égales à la cible recherchée.

Toutes les variantes de pneumatiques conformes à l'invention présentées sont produites sans évolution des procédés et restent avec un coût de revient industriel usuel.

## Revendications

1. Pneumatique (1) pour véhicule de tourisme comprenant dans un plan méridien :
deux bourrelets (50) destinés à être montés sur une jante, deux couches de flancs (30) reliés aux bourrelets (50), un sommet (20) comportant une bande de roulement (10), le sommet (20) ayant un premier côté relié à l'extrémité radialement extérieure de l'une des deux couches de flancs (30) et ayant un deuxième côté relié à l'extrémité radialement extérieure de l'autre des deux couches de flancs (30) ;
chaque flanc de pneumatique comprenant au moins une couche de flanc (30) constituée par un mélange élastomérique et s'étendant axialement vers l'intérieur du pneumatique (1) à partir d'une face extérieure du pneumatique, en contact avec l'air atmosphérique;
au moins une armature de carcasse (90) s'étendant depuis les deux bourrelets (50) jusqu'au sommet (20), l'armature de carcasse (90) comportant une pluralité d'éléments de renforcement de carcasse et étant ancrée dans les deux bourrelets (50) par un retournement autour d'une structure annulaire de renforcement (51), de manière à former dans chaque bourrelet une partie principale (52) et un retournement (53);deux zones basses (55) comme étant des portions du pneumatique, positionnées de part et d'autre de l'axe radial (OZ) passant par le centre O du pneumatique, une première zone basse d'un premier côté de l'axe radial (OZ) incluant le bourrelet (50) et au moins en partie la couche de flanc (30) de ce premier côté et une deuxième zone basse de l'autre côté de l'axe radial (OZ) incluant le bourrelet et au moins en partie la couche de flanc de ce deuxième côté ;
le bourrelet (50) comprend une couche latérale de renforcement (60) constitué d'un mélange élastomérique occupant un volume compris au moins en partie entre la couche de flanc (30), et le retournement de l'armature de carcasse (53) ;
chaque zone basse (55) ayant une surface méridienne délimitée par une droite axiale (AA') passant à une distance radiale égale à 70% de la distance H, où H étant la distance radiale entre une première droite axiale (HH') passant par le point le plus radialement intérieur de la structure annulaire de renforcement (51), et entre une deuxième droite axiale (DD') tangente à la bande de roulement en son point le plus radialement extérieur, et radialement intérieurement ladite surface méridienne étant délimitée par le contour périphérique du bourrelet destiné à être en contact avec la jante;
chaque zone basse occupant un volume obtenu par la rotation de ladite surface méridienne autour de l'axe de rotation du pneumatique ;
le bourrelet (50) de chaque zone basse (55) comportant au moins une couche de bourrage (70) comprise au moins en partie entre la partie principale de l'armature de carcasse (52), le retournement de l'armature de carcasse (53) et la portion radialement extérieure de la structure annulaire de renforcement (51) ;
chaque mélange élastomérique du pneumatique ayant un module élastique de rigidité de cisaillement et une perte viscoélastique mesurées selon la norme ASTM D 5992-96, à 23°C, sous une déformation de cisaillement égale à 10% ,
la couche de bourrage (70) et la couche latérale de renforcement du bourrelet (60) étant constituées de mélanges élastomérique dont la perte viscoélastique Tan(δ)max étant inférieure ou égale à 0.10
**caractérisé en ce que** chaque couche de mélange de chaque zone basse (55) a une perte viscoélastique Tan(δ)max inférieure ou égale à 0.10, représentant un volume compris entre 30% et 90% du volume total de ladite zone basse, et **en ce que** le module élastique de rigidité de cisaillement de chaque couche de flanc est compris dans l'intervalle [2.5 ; 10] MPa.

2. Pneumatique selon la revendication précédente, dans lequel lesdites couches de mélanges de la zone basse ayant une perte viscoélastique Tan(δ)max inférieure ou égale à 0.10, représentent un volume compris préférentiellement entre 40% et 90% du volume total de la zone basse, et encore préférentiellement un volume compris entre 50% et 90% du volume total de la zone basse.

3. Pneumatique (1) selon l'une des revendications précédentes, dans chaque bourrelet (50) une courbe de contact jante comprenant les points du pneumatique (1) en contact avec la jante (100); ladite courbe de contact jante reliant un premier point M1 du pneumatique axialement positionné le plus extérieurement, et en contact avec la jante, et un deuxième point M2 du pneumatique également en contact avec la jante et situé au milieu d'une portion rectiligne (130) reliant le crochet (120) au siège (110) de la jante; ledit pneumatique (1) comprenant également deux sections dans une coupe méridienne verticale du pneumatique gonflé, monté sur une jante, et écrasé sur un sol par une charge verticale (250) où la charge, la pression de gonflage, étant déterminées dans une norme de spécifications telle que l'ETRTO (Organisation Européenne Technique des Pneumatiques et des jantes) ; une première section étant située dans l'aire de contact, et une deuxième section étant située du côté opposé à la précédente par rapport à l'axe de rotation du pneumatique ;
dans la première section située dans l'aire de contact, dans au moins un premier bourrelet, la longueur de la courbe de contact jante, LADC, étant mesurée;
dans la deuxième section située à l'opposé de l'aire de contact par rapport à l'axe de rotation du pneumatique, dans au moins un deuxième bourrelet, la longueur de la courbe de contact jante, LCJ, étant mesurée, **dans lequel** le rapport de la différence des longueurs des courbes de contact jante des deux sections soit 100*(LADC-LCJ)/LCJ, est supérieur ou égal à 30%.

4. Pneumatique (1) selon la revendication précédente, **dans lequel** le rapport de la différence des longueurs des courbes de contact jante des deux sections soit 100*(LADC-LCJ)/LCJ, est supérieur ou égal à 40%, préférentiellement supérieur ou égal à 50%, encore préférentiellement supérieur ou égal à 60%.

5. Pneumatique (1) selon l'une des revendications précédentes, **dans lequel,** la distance DRB étant la distance radiale d'une extrémité de la couche de bourrage (70) radialement extérieure à la droite (HH'), ladite distance DRB est inférieure ou égale à 50% de la hauteur radiale H du pneumatique (1).

6. Pneumatique (1) selon l'une des revendications précédentes, **dans lequel,** la distance DRI étant la distance radiale d'une extrémité radialement intérieure de la couche latérale (60) de renforcement à la droite (HH'), ladite distance radiale DRI est comprise dans l'intervalle [5% ; 20%] de la hauteur radiale H du pneumatique (1).

7. Pneumatique (1) selon l'une des revendications précédentes, **dans lequel,** la distance DRL étant la distance radiale de l'extrémité radialement extérieure de la couche latérale de renforcement (60) à la droite (HH'), ladite distance radiale DRL est supérieure ou égale à 25% de la hauteur radiale H du pneumatique (1).

8. Pneumatique (1) selon l'une des revendications précédentes, **dans lequel** le retournement (53) de l'armature de carcasse (90) est en contact avec la partie principale (52) de l'armature de carcasse (90) radialement extérieurement le long dudit retournement (53).

9. Pneumatique (1) selon l'une des revendications précédentes, **dans lequel** ledit pneumatique comporte une armature de renforcement du bourrelet (50) axialement extérieurement au retournement (53) de l'armature de carasse (90), et axialement intérieurement au flanc (30).

10. Pneumatique (1) selon l'une des revendications précédentes, **dans lequel** dans chaque bourrelet, le mélange élastomérique constitutif d'au moins une couche parmi la couche de bourrage (70), et/ou la couche latérale de renforcement (60) et/ou la couche de flanc(30) a une composition à base d'un élastomère diénique, d'un système de réticulation, d'une charge renforçante, type Noir de Carbone N550, à un taux global compris entre 50 et 75 pce.

11. Pneumatique selon la revendication précédente, **dans lequel,** dans chaque bourrelet, le mélange élastomérique constitutif de la couche de bourrage (70), le mélange élastomérique constitutif de la couche latérale de renforcement (60), et le mélange élastomérique constitutif la couche de flanc (30) ont la même composition.

## Patentansprüche

1. Reifen (1) für einen Personenkraftwagen, umfassend in einer Meridianebene:
zwei Wülste (50), die dazu bestimmt sind, auf einer Felge montiert zu werden, zwei Seitenwandlagen (30), die mit den Wülsten (50) verbunden sind, einen Gürtel (20), der einen Laufstreifen (10) aufweist, wobei der Gürtel (20) eine erste Seite hat, die mit dem radial äußeren Ende der einen der beiden Seitenwandlagen (30) verbunden ist, und eine zweite Seite hat, die mit dem radial äußeren Ende der anderen der beiden Seitenwandlagen (30) verbunden ist;
wobei jede Reifenseitenwand mindestens eine Seitenwandlage (30) umfasst, die aus einem Elastomergemisch besteht und sich ausgehend von einer Außenseite des Reifens axial nach innerhalb des Reifens (1) erstreckt, in Kontakt mit der atmosphärischen Luft;
mindestens eine Karkassenverstärkung (90), die sich von den beiden Wülsten (50) aus bis zu dem Gürtel (20) erstreckt, wobei die Karkassenverstärkung (90) eine Vielzahl von Karkassenfestigkeitselementen aufweist und in den beiden Wülsten (50) durch einen Umschlag um eine ringförmige Festigkeitsstruktur (51) herum verankert ist, so dass in jeder Wulst ein Hauptteil (52) und ein Umschlag (53) gebildet werden; zwei niedrige Zonen (55) als Abschnitte des Reifens, die beidseits der durch den Mittelpunkt O des Reifens verlaufenden radialen Achse (OZ) angeordnet sind, wobei eine erste niedrige Zone einer ersten Seite der radialen Achse (OZ) die Wulst (50) und mindestens zum Teil die Seitenwandlage (30) dieser ersten Seite beinhaltet und wobei eine zweite niedrige Zone der anderen Seite der radialen Achse (OZ) die Wulst und mindestens zum Teil die Seitenwandlage dieser zweiten Seite beinhaltet;
wobei die Wulst (50) eine seitliche Festigkeitslage (60) umfasst, die aus einem Elastomergemisch besteht und ein Volumen einnimmt, das mindestens zum Teil zwischen der Seitenwandlage (30) und dem Umschlag der Karkassenverstärkung (53) liegt;
wobei jede niedrige Zone (55) eine Meridianfläche hat, die durch eine axiale Gerade (AA') begrenzt wird, die in einem radialen Abstand von 70 % des Abstands H verläuft, wobei H der radiale Abstand zwischen einer ersten axialen Geraden (HH'), die durch den radial innersten Punkt der ringförmigen Festigkeitsstruktur (51) verläuft, und zwischen einer zweiten axialen Geraden (DD'), die den Laufstreifen in seinem radial äußersten Punkt tangiert, ist, und wobei die Meridianfläche radial innen durch die Umfangskontur der Wulst begrenzt wird, die dazu bestimmt ist, in Kontakt mit der Felge zu sein;
wobei jede niedrige Zone ein Volumen einnimmt, das durch die Rotation der Meridianfläche um die Rotationsachse des Reifens erhalten wird;
wobei die Wulst (50) jeder niedrigen Zone (55) mindestens eine Wulstlage (70) aufweist, die mindestens zum Teil zwischen dem Hauptteil der Karkassenverstärkung (52), dem Umschlag der Karkassenverstärkung (53) und dem radial äußeren Abschnitt der ringförmigen Festigkeitsstruktur (51) liegt;
wobei jedes Elastomergemisch des Reifens einen elastischen Scherfestigkeitsmodul und einen viskoelastischen Verlustfaktor hat, die gemäß der Norm ASTM D 5992-96, bei 23 °C, unter einer Scherverformung von 10 % gemessen werden,
wobei die Wulstlage (70) und die seitliche Festigkeitslage der Wulst (60) aus Elastomergemischen bestehen, deren viskoelastische Verlustfaktor Tan(δ)max kleiner als oder gleich 0,10 ist
**dadurch gekennzeichnet, dass** jede Gemischlage jeder niedrigen Zone (55) einen viskoelastischen Verlustfaktor Tan(δ)max kleiner oder gleich 0,10 hat und ein Volumen zwischen 30 % und 90 % des Gesamtvolumens der niedrigen Zone ausmacht und dass der elastische Scherfestigkeitsmodul jeder Seitenwandlage in dem Intervall [2,5; 10] MPa liegt.

2. Reifen nach dem vorhergehenden Anspruch, wobei die Gemischlagen der niedrigen Zone, die einen viskoelastischen Verlustfaktor Tan(δ)max kleiner oder gleich 0,10 haben, ein Volumen von bevorzugt zwischen 40 % und 90 % des Gesamtvolumens der niedrigen Zone und noch bevorzugter ein Volumen zwischen 50 % und 90 % des Gesamtvolumens der niedrigen Zone ausmachen.

3. Reifen (1) nach einem der vorhergehenden Ansprüche, wobei in jeder Wulst (50) eine Felgenkontaktkurve die Punkte des Reifens (1) in Kontakt mit der Felge (100) umfasst; wobei die Felgenkontaktkurve einen ersten Punkt M1 des Reifens, der axial am weitesten außen angeordnet ist und in Kontakt mit der Felge ist, und einen zweiten Punkt M2 des Reifens, der ebenfalls in Kontakt mit der Felge ist und in der Mitte eines geradlinigen Abschnitts (130), der das Horn (120) mit dem Bett (110) der Felge verbindet, gelegen ist, verbindet; wobei der Reifen (1) auch zwei Bereiche in einem vertikalen Meridianschnitt des luftgefüllten, auf einer Felge montierten und durch eine vertikale Last (250) auf einen Boden gedrückten Reifens umfasst, wobei die Last, der Fülldruck in einer Spezifikationsnorm wie der ETRTO (European Tyre and Rim Technical Organisation) bestimmt werden; wobei ein erster Bereich in der Kontaktfläche gelegen ist und wobei ein zweiter Bereich auf der in Bezug auf die Rotationsachse des Reifens zu der vorhergehenden entgegengesetzten Seite gelegen ist;
wobei in dem ersten Bereich, der in der Kontaktfläche gelegen ist, in mindestens einer ersten Wulst die Länge der Felgenkontaktkurve, LADC, gemessen wird;
wobei in dem zweiten Bereich, der in Bezug auf die Rotationsachse des Reifens entgegengesetzt zu der Kontaktfläche gelegen ist, in mindestens einer zweiten Wulst die Länge der Felgenkontaktkurve, LCJ, gemessen wird, wobei das Verhältnis der Differenz der Längen der Felgenkontaktkurven der beiden Bereiche, d. h. 100* (LADC-LCJ)/LCJ, größer oder gleich 30 % ist.

4. Reifen (1) nach dem vorhergehenden Anspruch, wobei das Verhältnis der Differenz der Längen der Felgenkontaktkurven der beiden Bereiche, d. h. 100* (LADC-LCJ)/LCJ, größer oder gleich 40 %, bevorzugt größer oder gleich 50 %, noch bevorzugter größer oder gleich 60 % ist.

5. Reifen (1) nach einem der vorhergehenden Ansprüche, wobei, wenn der Abstand DRB der radiale Abstand eines Endes der radial äußeren Wulstlage (70) zu der Geraden (HH') ist, der Abstand DRB kleiner oder gleich 50 % der radialen Höhe H des Reifens (1) ist.

6. Reifen (1) nach einem der vorhergehenden Ansprüche, wobei, wenn der Abstand DRI der radiale Abstand eines radial inneren Endes der seitlichen Festigkeitslage (60) zu der Geraden (HH') ist, der radiale Abstand DRI in dem Intervall [5 %; 20 %] der radialen Höhe H des Reifens (1) liegt.

7. Reifen (1) nach einem der vorhergehenden Ansprüche, wobei, wenn der Abstand DRL der radiale Abstand des radial äußeren Endes der seitlichen Festigkeitslage (60) zu der Geraden (HH') ist, der radiale Abstand DRL größer oder gleich 25 % der radialen Höhe H des Reifens (1) ist.

8. Reifen (1) nach einem der vorhergehenden Ansprüche, wobei der Umschlag (53) der Karkassenverstärkung (90) radial außen entlang des Umschlags (53) in Kontakt mit dem Hauptteil (52) der Karkassenverstärkung (90) ist.

9. Reifen (1) nach einem der vorhergehenden Ansprüche, wobei der Reifen eine Festigkeitsverstärkung der Wulst (50) axial außerhalb des Umschlags (53) der Karkassenverstärkung (90) und axial innerhalb der Seitenwand (30) aufweist.

10. Reifen (1) nach einem der vorhergehenden Ansprüche, wobei in jeder Wulst das Elastomergemisch, aus dem mindestens eine Lage unter der Wulstlage (70) und/oder der seitlichen Festigkeitslage (60) und/oder der Seitenwandlage (30) besteht, eine Zusammensetzung auf Basis eines Dienelastomers, eines Vernetzungssystems, eines verstärkenden Füllstoffs, Typ Ruß N550, mit einem Gesamtanteil zwischen 50 und 75 phr hat.

11. Reifen nach dem vorhergehenden Anspruch, wobei in jeder Wulst das Elastomergemisch, aus dem die Wulstlage (70) besteht, das Elastomergemisch, aus dem die seitliche Festigkeitslage (60) besteht, und das Elastomergemisch, aus dem die Seitenwandlage (30) besteht, die gleiche Zusammensetzung haben.

## Claims

1. Tyre (1) for a passenger vehicle, comprising in a meridian plane:
two beads (50) intended to be mounted on a rim, two sidewall layers (30) connected to the beads (50), and a crown (20) comprising a tread (10), the crown (20) having a first side connected to the radially outer end of one of the two sidewall layers (30) and a second side connected to the radially outer end of the other of the two sidewall layers (30);
each tyre sidewall comprises at least one sidewall layer (30) consisting of an elastomer compound and extending axially towards the inside of the tyre (1) from an outer face of the tyre, in contact with the atmospheric air;
at least one carcass reinforcement (90) extending from the two beads (50) to the crown (20), the carcass reinforcement (90) comprising a plurality of carcass reinforcing elements and being anchored in the two beads (50) by a turn-up around an annular reinforcing structure (51), so as to form a main part (52) and a turn-up (53) in each bead;
two lower regions (55) being portions of the tyre, positioned on either side of the radial axis (OZ) passing through the centre O of the tyre, a first lower region on a first side of the radial axis (OZ) including the bead (50) and at least part of the sidewall layer (30) of this first side and a second lower region on the other side of the radial axis (OZ) including the bead and at least part of the sidewall layer of this second side;
the bead (50) comprises a lateral reinforcing layer (60) consisting of an elastomer compound occupying a volume contained at least partially between the sidewall layer (30) and the turn-up (53) of the carcass reinforcement;
each lower region (55) having a meridian surface delimited by an axial straight line (AA') passing at a radial distance equal to 70% of the distance H, where H is the radial distance between a first axial straight line (HH') passing through the radially innermost point of the annular reinforcing structure (51), and a second axial straight line (DD') tangent to the tread at its radially outermost point, and radially inwardly said meridian surface being delimited by the peripheral contour of the bead intended to be in contact with the rim;
each lower region occupying a volume obtained by the rotation of said meridian surface about the axis of rotation of the tyre;
the bead (50) of each lower region (55) comprising at least one filler layer (70) contained at least partially between the main part of the carcass reinforcement (52), the turn-up of the carcass reinforcement (53) and the radially outer portion of the annular reinforcing structure (51);
each elastomer compound of the tyre having an elastic shear modulus and a viscoelastic loss measured in accordance with ASTM D 5992-96, at 23°C, under a shear strain of 10%;
the filler layer (70) and the lateral reinforcing layer (60) consisting of an elastomer compound the viscoelastic loss Tan(δ)max of which is less than or equal to 0.10,
**characterized in that** each layer of compound of each lower region (55) having a viscoelastic loss Tan(δ)max less than or equal to 0.10 represents a volume of between 30% and 90% of the total volume of said lower region **and in that** the elastic shear modulus of each sidewall layer is in the range [2.5 ; 10] MPa.

2. Tyre according to one of Claims 1 and 2, **wherein** said layers of compounds of the lower region having a viscoelastic loss Tan(δ)max less than or equal to 0.10 preferably represent a volume of between 40% and 90% of the total volume of said lower region, and more preferably a volume of between 50% and 90% of the total volume of the lower region.

3. Tyre (1) according to one of the preceding claims, in which a rim contact curve in each bead (50) comprises the points of the tyre (1) in contact with the rim (100), said rim contact curve connecting a first point M1 of the tyre that is positioned axially outermost, and in contact with the rim, and a second point M2 of the tyre that is also in contact with the rim and is located in the middle of a rectilinear portion (130) connecting the flange (120) to the seat (110) of the rim; said tyre (1) also comprising two sections in a vertical meridian plane of the inflated tyre, mounted on a rim, and compressed against the ground by a vertical load (250), wherein the load and the inflation pressure are determined in accordance with a specification such as the ETRTO (European Tyre and Rim Technical Organisation) standard, a first section being located in the contact patch, and a second section being located on the opposite side from the preceding section relative to the axis of rotation of the tyre;
the length of the rim contact curve, LADC, being measured in the first section located in the contact patch, in at least a first bead;
the length of the rim contact curve, LCJ, being measured in the second section located opposite the contact patch relative to the axis of rotation of the tyre, in at least a second bead, **wherein** the ratio of the difference in the lengths of the rim contact curves in the two sections, i.e. 100*(LADC-LCJ)/LCJ, is greater than or equal to 30%.

4. Tyre (1) according to one of the preceding claims, **wherein** the ratio of the difference in the lengths of the rim contact curves of the two sections, i.e. 100*(LADC-LCJ)/LCJ, is greater than or equal to 40%, preferably greater than or equal to 50%, more preferably greater than or equal to 60%.

5. Tyre (1) according to one of the preceding claims, wherein the distance DRB being the radial distance from a end of the filler layer (70) radially outer to the straight line (HH'), said distance DRB is less than or equal to 50% of the radial height H of the tyre (1).

6. Tyre (1) according to one of the preceding claims, the distance DRI being the radial distance from a radially inner end of the lateral reinforcing layer (60) to the straight line (HH'), **wherein** said radial distance DRI is in the range [5% ; 20%] of the radial height H of the tyre (1).

7. Tyre (1) according to one of the preceding claims, the distance DRL being the radial distance from the radially outer end of the lateral reinforcing layer (60) to the straight line (HH'), **wherein** said radial distance DRL is greater than or equal to 25% of the radial height H of the tyre (1).

8. Tyre (1) according to one of the preceding claims, **wherein** the turn-up (53) of the carcass reinforcement (90) is in radially outer contact with the main part (52) of the carcass reinforcement (90) along said turn-up (53).

9. Tyre (1) according to one of the preceding claims, **wherein** said tyre comprises a reinforcement for strengthening the bead (50) axially outside the turn-up (53) of the carcass reinforcement (90) and axially inside the sidewall (30).

10. Tyre (1) according to one of the preceding claims, **wherein,** in each bead, the elastomer compound forming at least one layer of the filler layer (70), and/or the lateral reinforcing layer (60), and/or the sidewall layer (30), has a composition based on a diene elastomer, a crosslinking system, and a reinforcing filler such as carbon black N550, at an overall content of between 50 and 75 phr.

11. Tyre (1) according to one of the preceding claims , **wherein,** in each bead, the elastomer compound forming the filler layer (70), the elastomer compound forming the lateral reinforcing layer (60) and the elastomer compound forming the sidewall layer (30) have the same composition.
